# EUROPEAN PATENT SPECIFICATION

(11) **EP 2 880 291 B1**
(45) Date of publication and mention of the grant of the patent: **13.03.2019**
(21) Application number: 13756332.6
(22) Date of filing: 31.07.2013
(51) Int. Cl.: F02D 41/02, F02D 41/14, F02D 41/40

(54) **EXHAUST GAS TREATMENT SYSTEM (ATS) FOR INTERNAL COMBUSTION ENGINE**
ABGASBEHANDLUNGSSYSTEM (ATS) FÜR EINEN VERBRENNUNGSMOTOR
SYSTÈME DE TRAITEMENT DE GAZ D'ÉCHAPPEMENT (ATS) POUR MOTEUR À COMBUSTION INTERNE

(30) Priority: 31.07.2012 EP 12178647; 31.07.2012 EP 12178646; 31.07.2012 EP 12178643
(43) Date of publication of application: 10.06.2015
(73) Proprietor: FPT Industrial S.p.A., 10156 Torino (IT)
(72) Inventor: CERCIELLO, Giovanni, I-10139 Torino (IT); TORBATI, Reza, I-10034 Chivasso (IT); AIMAR, Bruno, I-12020 Cartignano (IT)
(74) Representative: Franzolin, Luigi
(86) International application number: PCT/EP2013/066091
(87) International publication number: WO 2014/020065

(56) References cited:
- EP-A1- 1 418 316
- WO-A2-2008/062292
- DE-A1-102008 036 127
- DE-A1-102008 058 418

## Description

### Application field of the invention

The present invention refers to the field of exhaust gas treatment lines (ATS: After Treatment Systems) of the type based on PM-CAT filters, also known as POC (Particulate Oxidation Catalyst) or PM-Kat or Flow-through filters (FTF) or Open particulate filters or Partial flow filter (PFF) or Partial filter technology (PFT) or PM oxidation catalyst or PM filter catalyst.

DE102008058418 from EMITEC EMISSIONSTECHNOLOGIE discloses all the features of the preamble of claim 1.

### Description of the prior art

Off-road vehicles usually use PM-CAT filters in order to capture the carbonaceous particulate matter.

Such PM-CAT filters, unlike the DPF filters (Diesel particulate filter), are open filters, in the sense that the alveoli made in the body of the filter are open and allow the passage of the gases in any saturation condition of the filter itself. The particulate matter is actually filtered by centrifugation, which causes the particulate matter to collide with and to settle within the porous walls of the alveoli, where it gets trapped.

A good survey on the PM-CAT filter is given on "Particle Oxidation Catalysts", W Addy Majewski, found on www.DieselNet.com, revision 2011.02b.

An example of commercial name of a PM-CAT device is PM-Metalit™ of Emitec.

It comprises alternating layers of corrugated metal foil and porous sintered metal fleece. The corrugated foil is formed to direct the gas flow so it impinges onto the metal fleece. The internal surfaces of the PM-Cat do not have catalyst coatings.

The filtering power of PM-CAT filters is between 50% and 90%, thus they are to able to retain all the particulate matter until the alveoli are full the gas can flow through the filter without being treated.

Generally, both the PM-CAT and the DPF filters are coupled with a DOC (Diesel Oxidation Catalyst), which is arranged upstream of the respective filter and promotes the production of NO₂, in order to facilitate a natural reaction of the first type, namely promoting the reaction of the carbonaceous soot with the NO₂ in order to generate CO/CO2 according to the reaction

C + NO₂ -> NO + CO/CO₂

Such reaction is said to occur naturally or passively when the filter reaches an interval of temperatures comprised between 220°C and 450°C approximately. This depends on the operating conditions of the heat engine. Thus such regeneration is called low temperature passive regeneration of the first type.

A high temperature passive or natural regeneration is also known, and occurs when the filter reaches temperatures exceeding 550°C. Such natural regeneration of the second type is very rare.

PM-CAT filters may be provided as part of the original equipment or they can be bought aftermarket and installed on the vehicle, since such devices do not affect the management devices of the heat engine.

DPF filters are closed filters, they completely filter the exhaust gases and they tend to clog due to the saturation of particulate matter, in spite of the presence of such passive regeneration process.

Thus, high temperature active regeneration cycles, with temperatures from 560°C and an average value of 650°C, are commanded and managed by a control unit, in order to promote a reaction of the second type, this time being active, namely generating CO/CO₂ from the reaction of the accumulated carbonaceous soot C with the oxygen O₂, thus freeing the DPF filter and allowing the engine apparatus/exhaust line (ATS) to restore its original performance.

The regeneration procedures are also known in the filed of the open filters from DE102008058418.

A good survey on DOC is "Diesel Oxidation Catalyst", W. Addy Majewski, found on www.DieselNet.com, revision 2012.02a.

The typical reaction of the second type, both active or passive is the following:

C + O₂ -> CO/CO₂

DPF filters cannot be installed aftermarket on vehicles that are not equipped with them originally, since they cannot manage the active regeneration cycles.

Type-approval cycles performed by type-approval Authorities include the test of the functioning of the heat engine according to predefined engine speed/power/time curves.

When the quantity of particulate matter released in the environment, and of the other pollutants being subject to regulations, is lower than an acceptance threshold, the engine apparatus/exhaust line passes the type approval tests. Type approval cycles and emission limits change according to the type of vehicle. The actual operating conditions of the vehicle may be very different from the type approval cycles conditions. In certain circumstances, the vehicles originally equipped with PM-CAT filters may be used in a way different from the type-approval curves, thus the filters can be completely saturated and the particulate matter produced by the heat engine will be almost totally released in the environment.

Another problem that may occur is called "blow off", wherein at certain temperatures and with some very high levels of filter saturation, high flow rates of exhaust gases may carry away the soot on the walls of the alveoli, releasing it in the environment.

Furthermore, after an excessive accumulation of soot, it may happen that the engine is brought to heat the PM-CAT filter up to promote an uncontrolled reaction of the second type, reaching and exceeding 900°C and provoking irreversible damages to the filter. A case is known when the vehicle itself took fire provoking serious damages to itself and to the surrounding environment, affecting a vast geographical area.

According to the prior art, in order to overcome such drawbacks, diagnosis systems detecting the saturation level of the PM-CAT filters are adopted. An example of such systems is given in WO2012082268.

### Summary of the invention

Therefore, a first aim of the present invention is to reduce the manufacturing and installation costs of exhaust gas treatment systems (ATS).

Another aim of the present invention is to prolong the service life of the open filters, without superficial treatments.

A further aim of the present invention is to improve the exhaust gas treatment systems based on PM-CAT filters, so that they can be more efficient, safer, and even suitable to very low-power work cycles.

Another aim of the present invention is to provide a system allowing the regeneration of open filters.

These and further aims are reached by means of an exhaust gas treatment system (ATS) according to claim 1.

Thanks to the present invention, during the active regeneration procedures, any delivery of unburnt hydrocarbons is avoided/limited.

In other words, thanks to the present invention, PM-CAT filters may used also in fields where only DPF filters have been used so far.

Given the remarkable differences between the costs of PM-CAT filters, that do not have any superficial treatment with noble metals (platinum, palladium, etc.), and DPF filters, the saving is very high.

It is also object of the present invention an exhaust gas treatment method.

It is also object of the present invention an internal combustion engine comprising the aforementioned exhaust gas treatment system and a vehicle comprising such engine.

It should be clear that a method for changing/switching the fuel maps is known from EP1418316. Such document refers to the ATS provided with DPF filters, in order to adjust the Oxygen amount for improving the soot conversion. Therefore, not only the aim and the result are different, but also the problem to avoid the delivery of unburnt hydrocarbons cannot even arise in the field of DPF filters.
In addition, even if the DOC catalysts are well known, the features of the DOC are not relevant for carrying out the present invention.

Further details and characteristics of the invention will be described below, also with the help of the claims which are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 schematically shows a catalyst-filter system according to the present invention,
figure 2 schematically shows an ATS system according to the present invention, which integrates the catalyst-filter system shown in figure 1.

In the figures the same reference numbers and letters identify the same elements or components.

### Detailed description of preferred embodiments of the invention

The system that is object of the present invention provides the active regeneration of PM-CAT filters similarly to what happens for DPF filters. The active regeneration may be a process per se known, which includes, for example, the post-injection of additional fuel during some specific strokes of the engine, so that the fuel burns in the exhaust gas treatment system rather than in the cylinders, promoting an active reaction of the second type, namely the oxidation of the carbon residues by means of oxygen.

In the following, the expression "to induce an active regeneration" will mean to increase the temperature of the ATS by enriching the fuel/air ratio and/or by fuel post-injection techniques or the like, namely independently of the work point and of the work conditions of the internal combustion engine.

In general the enrichment of the fuel/air ratio is used to manage the DOC inlet temperature, while the post-injections to manage the further temperature increasing within the DOC, exploited into the particulate filter.

In the following the expression "filter unable to retain all the particulate matter" will refer to any particulate filter different from DPF.

The reasons of such discrimination towards the PM-CAT filters are described in detail below.

The regeneration temperature of any filter depends also on the amount of particulate matter accumulated in the filter. Thus, the application on PM-CAT filters of the same regeneration techniques as DPF filters for the same filter saturation percentage will cause an excessive increase of the temperatures reached during the regeneration process, which would damage the PM-CAT filters.

According to an embodiment of the present invention, the management of the regeneration of the PM-CAT filter is performed on the basis of a predictive estimation of the saturation level of the filter.

Advantageously, a predictive estimation of the accumulation of particulate matter avoids to reach particulate levels that may bring to an uncontrollable second type regeneration, both passive and active.

The predictive estimation is known in the field of DPF filters, but, if it was used as it is in the field of PM-CAT filters, it would be inadequate, since it would bring to an estimation of soot accumulation such that the regeneration should be five times more frequent than in the DPF filters. The estimator of the saturation level of the filter is based on:
- a first model of the grade of smoke of the heat engine, in order to estimate a first amount of particulate matter produced by the heat engine as a function of the operating conditions of the engine itself, such model can be obtained experimentally,
- a second model of the efficiency of the promotion of the first type reaction, in order to estimate a second amount of particulate converted into CO/CO₂, namely by a reaction based on the reduction of NO₂ in NO, preferably within an interval of temperatures comprised between 220°C and 450°C;
- a third model of the efficiency of the promotion of the second type reaction, in order to estimate a second amount of particulate naturally converted into CO/CO₂, namely by a natural reaction based on the reduction of O₂ during the functioning of the heat engine, which brings the ATS within an interval of temperatures comprised between 550°C and 650°C.

It is clear that the first amount of particulate matter gives an additional contribution, by settling in the alveoli of the PM-CAT filter, while the other two are subtracted from the first one. In general, the first amount is higher than the absolute value of the sum of the other two, above all when the engine operates in low power conditions, namely when the exhaust line does not reach a temperature that is high enough to allow a natural reaction of the first type. For such reason, the present invention teaches how to apply the active regeneration to the PM-CAT filter.

According to laboratory tests on specific intervals of temperature, (220 - 450°C), PM-CAT filters have proven to be more efficient than DPF filters in the promotion of first type reactions having a coefficient comprised between 1.6 and 2.

Thus, according to the present invention, the predictive estimation, in particular the second model, is modified in order to take into account the higher efficiency of the PM-CAT filters with respect to the DPF filters in promoting the reaction of the first type. Thus, said second amount, with respect to a DPF filter, is multiplied by a coefficient comprised between 1.6 and 2. Such coefficient represents a ratio between the efficiency of the PM-CAT filter and of the DPF filter in promoting the natural regeneration of the first type.

Since, in the field of passive regenerations, the reaction of the first type is predominant, the higher efficiency of the PM-CAT filter in promoting the reactions of the first type has to be taken into account and implies a reduction of the aforementioned estimation of the regeneration frequency. After months of tests, it has been understood that the reason of such anomalous behaviour is connected to the intrinsic characteristics of PM-CAT filters, which filtrate only 50% - 90% of the particulate produced by the heat engine. Thus, according to the present invention, the first model of the grade of smoke, which depends only on the characteristics of the heat engine, was weighted with a coefficient comprised between 0.5 and 0.9, namely equal to the filtration/capture/retention efficiency of the particulate matter filter.

Further tests have validated the solution identified above. The fact that the regeneration frequency is doubled when using a PM-CAT filter can be tolerated, considering the saving due to the cost of the filter itself. Thus, after having understood the aforementioned aspects, it has been possible to consider the use of PM-CAT filters in combination with the active regeneration processes.

Furthermore a setting of the fuel supply system of the engine has been performed. Thus the maps injection/grade of smoke were improved. Such operation is known as useless in the field of DPF filters, since they filtrate 100% of the particulate matter. Such operation can be performed on any engine, obtaining a reduction of about 40% - 60% of the particulate matter produced by the engine.

According to a preferred embodiment of the present invention, in order to avoid that the temperatures reached in the PM-CAT filter may become too high, due to the fuel post-injection, a first temperature sensor T1 is provided between the DOC and the PM-CAT. In this way the temperature is constantly monitored in order to avoid that it exceeds 650°C, which usually happens during the regeneration of the DPF filters. During the experimentation further problems have arisen. During the procedures of regeneration, PM-CAT filters, unlike DPF filters, allow the passage of unburnt hydrocarbons, since the PM-CAT filter does not have any superficial treatment with noble metals (platinum, palladium, etc.) that can remove/convert the HC.

According to the present invention, such problem has been solved by increasing the temperature at the inlet of the DOC to a minimum value of 500°C and to an optimal value of 550°C. To that end, in order to control the process in an adequate way, the second temperature sensor T2 arranged upstream of the DOC and the first temperature sensor T1 arranged between the DOC and the PM-CAT allow to monitor in detail the regeneration process.

Always according to the present invention, such optimal interval of temperatures is reached by enriching the mixture, namely by lowering the lambda which represents the ratio between air and fuel.

The temperature control strategy just upstream the PM-CAT, namely by means of T1, allows to ensure a temperature of about 600 +/-50°C in the PM-CAT, which is lower than the regeneration temperature of the DPF.

The control of temperature at the filter, namely at the outlet of the DOC, is controlled through the post injections suitable to carry out the exothermal reaction within the DOC needed for increasing of 50-100°C the temperature of the gas flow through the filter.

It is clear that the temperature difference between the inlet and the outlet of the DOC is at least 50°C lower than in the DOC of the know systems.

It is possible to estimate the temperatures reached in the PM-CAT filter in a predictive way, as a function of the particulate matter accumulated in the PM-CAT filter and of an amount of post-injected fuel. The sensors mentioned above, T1, T2, allow to give a feedback to the control, optimizing and stabilizing the process.

As it is known, the lambda varies in relation to the power/torque required to the engine, but the enriching that is necessary to promote the reaction, preferably of the second type, since it is more rapid, combined with the normal decrease of the lambda may result as intolerable, since the remarkable grade of smoke of the engine, above all when the power requests exceed 40% of the maximum power, induces the system to release particulate matter beyond the admissible limits. This happens because the PM-CAT filter is an open filter.

Although it is very difficult that such phenomenon occurs during a type-approval cycle, such problem has been considered.

According to a first alternative embodiment of the present invention, during the regeneration of the PM-CAT filter, maps of fuel supply/grade of smoke, different from the ones of the normal operating conditions of the vehicle, have been used in order to give a lower limit to lambda corresponding to values between 1.5 and 1.1.

According to another alternative embodiment of the present invention, during the regeneration process of the PM-CAT filter, the fuel supply map is unchanged until a remarkable torque/power is required, namely exceeding a preset threshold, for example 50% of the maximum power. Beyond such threshold, a device limiting the enrichment intervenes, namely a limiting device which avoids that the lambda goes below the aforementioned values.

In relation to said second alternative embodiment, the enrichment curve is smoothed, according to any law, for example in the lambda interval between 1.5 and 1.1, wherein the lower limit, 1.1, cannot be passed. A filter-saturator, for example, may be used in order to avoid the enrichments to exceed 1.1 - intended as a lower limit - and possibly to level/smooth the progression of the enrichment in the interval between 1.5 and 1.1, wherein 1.1 is the lower limit. These alternative embodiments have in common the use of limiting means which act in proportion to the torque/power request to the heat engine, both modifying the maps in real time and commuting to further pre-stored maps.

In this case the meaning of "filter", for the limiting means, is attributed to a logical function commonly used to program the engine control units through controllistic schemes. An example of limiting means is given for example on The intervals of intervention of the limiting means may be varied according to the characteristics of the engine, to the presence of the supercharging, etc..

An interval of intervention of the limiting device around lambda=1.3, with a range for example of +/-0.2, can be considered as reasonable.

Thus the maximum effect of the enrichment of the mixture in order to heat the catalyst DOC occurs when a low torque/power is required, while such effect is reduced as the required power increases, namely as a function proportional to the delivered torque/power.

Thus it is possible to regenerate a filter unable to retain all the particulate matter, namely an open filter, unlike the DPF, and it is possible to ensure a reasonable functionality of the engine, without releasing too much pollutants in the environment.

Thanks to the present invention, a PM-CAT filter can be used as an alternative to a DPF filter in the field of the DPF filter usage.

On the contrary, if the present invention is used in the field of the off-road vehicles, the service life of the PM-CAT filter can be extended extraordinarily and the use of the vehicle can be also very different from the usage curves of the type-approval cycles. An optimal behaviour of the system can be guaranteed regardless of its usage.

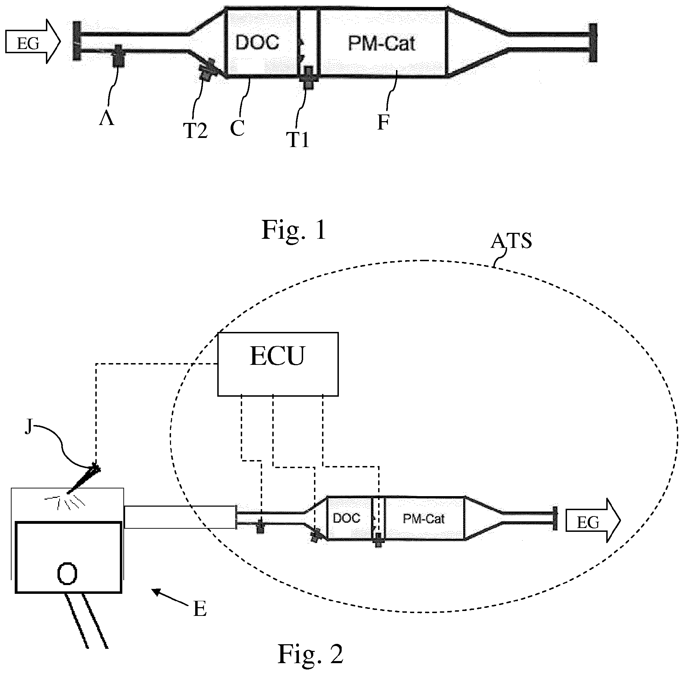

The present invention, with particular reference to the management of the fuel supply of the engine connected to the filter regeneration, may be implemented by a specific electronic hardware communicating with the control unit ECU, or such management can be carried out to the control unit ECU itself, appropriately programmed. The same is true for the estimator of the saturation level of the filter, for the system for controlling and monitoring the temperature of the DOC and for the limiting device of the mixture enrichment. Figure 1 shows a schematic view of a portion of the ATS system that is object of the present invention, comprising a catalyst C and an open-particulate filter F with a first temperature sensor placed between the catalyst and the filter.

A second temperature sensor T2 is placed upstream of the catalyst C and a lambda sensor is placed upstream the second temperature sensor T2.

Figure 2 shows an overall schematic view of the ATS system interacting with an internal combustion engine E. The estimator is integrated in the ECU which is connected to the aforementioned sensors T1, T2, lambda and which controls the injection and the post-injection of the fuel by means of the injectors J in the cylinder chambers of the internal combustion engine E.

From the description set forth above it will be possible for the person skilled in the art to embody the invention as defined by the claims with no need of describing further construction details. The elements and the characteristics described in the different preferred embodiments may be combined between each other.

## Claims

1. Exhaust gas treatment system (ATS) for internal combustion engine, the system being based on an open particulate filter (F), the treatment system comprising a Diesel Oxidation Catalyst (C) upstream of the filter (F) according to a direction of the exhaust gas outflow (EG) and means for controlling the injection (ECU) in order to control a predetermined air/fuel ratio (lambda) to be supplied to the engine, and **characterized in that** said injection control means (ECU) comprise
- means for promoting an enrichment of said air/fuel ratio in order to cause an active regeneration of the particulate filter by increasing the temperature at an inlet of the Diesel Oxidation Catalyst (C) to a minimum value of 500°C and to an optimal value of 550°C by enriching the mixture and by controlling the temperature at the filter, namely at the outlet of the Diesel Oxidation Catalyst, through post injections suitable to carry out an exothermal reaction within the Diesel Oxidation Catalyst needed for increasing of 50-100°C the temperature of the gas flow through the particulate filter and
- means for limiting said enrichment, during said active regeneration procedure, acting as a function of the power/torque required to the internal combustion engine.

2. System according to claim 1, wherein said injection control means are suitable to activate first injection maps during a normal operating condition and wherein said limiting means are suitable to activate second injection maps, leaner than the first ones, during an active regeneration procedure of the particulate filter.

3. System according to claim 2, wherein said activation means of said second maps are suitable to activate said second maps when a power request exceeds a predetermined threshold.

4. System according to claim 1, wherein said limiting means comprise a filter-saturator adapted to level an enrichment progression in an interval of values, having a lower limit that cannot be passed by the enrichment.

5. System according to claim 4 , wherein said lower limit is 1.1.

6. System according to one of the claims 4 or 5, wherein said interval of values is comprised between 1.5 and 1.1.

7. A method for controlling an active regeneration procedure of an exhaust gas treatment system (ATS) for internal combustion engine equipped with
- an open particulate filter (F) and
- a Diesel Oxidation Catalyst (C) placed upstream of the open filter (F) according to a direction of the exhaust gas outflow (EG) and with
- injection control means (ECU) in order to control an engine fuel supply according to a predetermined air/fuel ratio (lambda),
the method being **characterized in that** it comprises:
a step (i) of active regeneration of the filter (F) comprising an enrichment of said air/fuel ratio to increase the temperature at an inlet of the Diesel Oxidation Catalyst (C) to a minimum value of 500°C and at an optimal value of 550°C and post injections suitable to carry out an exothermal reaction within the Diesel Oxidation Catalyst (C) needed for increasing of 50 - 100°C the temperature of the gas flow through the open particulate filter and
a step (ii) of limitation of said enrichment, during said active regeneration procedure, as a function of the power/torque required to the internal combustion engine.

8. Method according to claim 7, wherein injection control means are suitable to activate first injection maps during a normal operating condition and wherein said step (11) limiting said enrichment comprises a step (iii) of activation of second injection maps, leaner than the first ones, during an active regeneration procedure of the particulate filter.

9. Method according to claim 8, wherein said step (iii) of activation of said second maps is performed when a power request exceeds a predetermined threshold.

10. Method according to claim 7, wherein said step of limitation of said enrichment comprises (iv) a filtering by means of a filter-saturator that is adapted to level an enrichment progression in an interval of values, having a lower limit that cannot be passed by the enrichment.

11. Method according to claim 10, wherein said predetermined value is 1.1.

12. Method according to one of the claims 10 or 11, wherein said interval of values is comprised between 1.5 and 1.1.

13. Computer program comprising program code means to cause the system of anyone of the claims 1 to 6 to execute the steps of the method claim 7.

14. Computer-readable means comprising a recorded program, according to claim 13.

15. Internal combustion engine comprising an exhaust gas treatment system (ATS) according to one of the claims from 1 to 6.

16. Vehicle comprising an internal combustion engine according to claim 15.

## Patentansprüche

1. Abgasbehandlungssystem (ATS) für Verbrennungskraftmaschinen, das System basierend auf einem offenen Partikelfilter (F), das Behandlungssystem umfassend einen dem Filter (F) gemäß einer Richtung der Abgasausströmung (EG) vorgelagerten Dieseloxidationskatalysator (C) und Mittel zum Steuern der Einspritzung (ECU), um ein vorher festgelegtes Luft/Kraftstoff-Verhältnis (Lambda) zu steuern, welches dem Motor zugeführt werden soll, und **dadurch gekennzeichnet, dass** die Einspritzsteuerungsmittel (ECU) umfassen:
- Mittel zum Fördern einer Anreicherung des Luft/Kraftstoff-Verhältnisses, um durch Anreicherung des Gemisches eine aktive Regeneration des Partikelfilters durch Erhöhen der Temperatur an einem Einlass des Dieseloxidationskatalysators (C) auf einen Mindestwert von 500° C und auf einen optimalen Wert von 550° C zu bewirken, und durch steuern der Temperatur am Filter, und zwar am Auslass des Dieseloxidationskatalysators, durch Nacheinspritzungen, die dazu geeignet sind, eine exotherme Reaktion innerhalb des Dieseloxidationskatalysators auszuführen, die zum Erhöhen der Temperatur der Gasströmung durch den Partikelfilter um 50 - 100° C notwendig ist, und
- Mittel zum Begrenzen der Anreicherung während des aktiven Regenerationsvorgangs, die in Abhängigkeit der/des für die Verbrennungskraftmaschine erforderlichen Leistung/Drehmoments funktionieren.

2. System nach Anspruch 1, wobei die Einspritzsteuerungsmittel dazu geeignet sind, erste Einspritzkennfelder während eines normalen Betriebszustands zu aktivieren, und wobei die Begrenzungsmittel dazu geeignet sind, während eines aktiven Regenerationsvorgangs des Partikelfilters zweite Einspritzkennfelder zu aktivieren, die magerer sind, als die ersten.

3. System nach Anspruch 2, wobei die Aktivierungsmittel der zweiten Kennfelder dazu geeignet sind, die zweiten Kennfelder zu aktivieren, wenn eine Leistungsanforderung einen vorher festgelegten Grenzwert überschreitet.

4. System nach Anspruch 1, wobei die Begrenzungsmittel einen Filter-Sättiger umfassen, der dafür ausgelegt ist, einen Anreicherungsverlauf in einem Wertintervall anzupassen, der eine untere Grenze aufweist, die durch die Anreicherung nicht überschritten werden darf.

5. System nach Anspruch 4, wobei die untere Grenze 1,1 beträgt.

6. System nach einem der Ansprüche 4 oder 5, wobei das Wertintervall zwischen 1,5 und 1,1 liegt.

7. Verfahren zum Steuern eines aktiven Regenerationsvorgangs eines Abgasbehandlungssystems (ATS) für Verbrennungskraftmaschinen ausgestattet mit:
- einem offenen Partikelfilter (F) und
- einem Dieseloxidationskatalysator (C), der dem offenen Filter (F) gemäß einer Richtung der Abgasausströmung (EG) vorgelagert angeordnet ist, und mit
- Einspritzsteuerungsmitteln (ECU), um eine Motorkraftstoffversorgung gemäß einem vorher festgelegten Luft/Kraftstoff-Verhältnis (Lambda) zu steuern,
das Verfahren **dadurch gekennzeichnet, dass** es Folgendes umfasst:
einen Schritt (i) aktiver Regeneration des Filters (F) umfassend eine Anreicherung des Luft/Kraftstoff-Verhältnisses, um die Temperatur an einem Einlass des Dieseloxidationskatalysators (C) auf einen Mindestwert von 500° C und einen optimalen Wert von 550° C zu erhöhen, und Nacheinspritzungen, die dazu geeignet sind, eine exotherme Reaktion innerhalb des Dieseloxidationskatalysators (C) auszuführen, die zum Erhöhen der Temperatur der Gasströmung durch den offenen Partikelfilter um 50 - 100° C notwendig ist, und
einen Schritt (ii) der Begrenzung der Anreicherung während des aktiven Regenerationsvorgangs in Abhängigkeit der/des für die Verbrennungskraftmaschine erforderlichen Leistung/Drehmoments.

8. Verfahren nach Anspruch 7, wobei die Einspritzsteuerungsmittel dazu geeignet sind, erste Einspritzkennfelder während eines normalen Betriebszustands zu aktivieren, und wobei Schritt (ii), der die Anreicherung begrenzt, einen Schritt (iii) der Aktivierung der zweiten Einspritzkennfelder, die magerer sind als die ersten, während eines aktiven Regenerationsvorgangs des Partikelfilters umfasst.

9. Verfahren nach Anspruch 8,
wobei Schritt (iii) der Aktivierung der zweiten Kennfelder ausgeführt wird, wenn eine Leistungsanforderung einen vorher festgelegten Grenzwert überschreitet.

10. Verfahren nach Anspruch 7, wobei der Schritt der Begrenzung der Anreicherung eine Filterung (iv) mittels eines Filters-Sättigers umfasst, der dafür ausgelegt ist, einen Anreicherungsverlauf in einem Wertintervall anzupassen, der eine untere Grenze aufweist, die durch die Anreicherung nicht überschritten werden darf.

11. Verfahren nach Anspruch 10, wobei der vorher festgelegte Wert 1,1 beträgt.

12. Verfahren nach einem der Ansprüche 10 oder 11, wobei das Wertintervall zwischen 1,5 und 1,1 liegt.

13. Computerprogramm umfassend Programmkodemittel, um das System nach einem der Ansprüche 1 bis 6 zu veranlassen, die Schritte des Verfahrens nach Anspruch 7 auszuführen.

14. Computerlesbare Mittel umfassend ein aufgenommenes Programm nach Anspruch 13.

15. Verbrennungskraftmaschine umfassend ein Abgasbehandlungssystem (ATS) nach einem der Ansprüche 1 bis 6.

16. Fahrzeug umfassend eine Verbrennungskraftmaschine nach Anspruch 15.

## Revendications

1. Système de traitement de gaz d'échappement (ATS) pour moteur à combustion interne, le système étant basé sur un filtre à particules ouvert (F), le système de traitement comprenant un catalyseur d'oxydation diesel (C) en amont du filtre (F) selon une direction de l'écoulement sortant de gaz d'échappement (EG) et un moyen pour commander l'injection (ECU) afin de commander un rapport air/carburant (lambda) prédéterminé à apporter au moteur, et **caractérisé en ce que** ledit moyen de commande d'injection (ECU) comprend
- un moyen pour favoriser un enrichissement dudit rapport air/carburant afin de provoquer une régénération active du filtre à particules en augmentant la température au niveau d'une entrée du catalyseur d'oxydation diesel (C) à une valeur minimale de 500 °C et à une valeur optimale de 550 °C en enrichissant le mélange et en commandant la température au niveau du filtre, à savoir au niveau de la sortie du catalyseur d'oxydation diesel, par le biais de post-injections appropriées pour réaliser une réaction exothermique dans le catalyseur d'oxydation diesel nécessaire pour augmenter de 50-100 °C la température de l'écoulement de gaz à travers le filtre à particules et
- un moyen pour limiter ledit enrichissement, durant ladite procédure de régénération active, agissant en fonction de la puissance/couple nécessaire au moteur à combustion interne.

2. Système selon la revendication 1, dans lequel ledit moyen de commande d'injection est approprié pour activer des premières cartes d'injection durant une condition de fonctionnement normal et dans lequel ledit moyen de limitation est approprié pour activer des deuxièmes cartes d'injection, plus pauvres que les premières, durant une procédure de régénération active du filtre à particules.

3. Système selon la revendication 2, dans lequel ledit moyen d'activation desdites deuxièmes cartes est approprié pour activer lesdites deuxièmes cartes quand une demande de puissance dépasse un seuil prédéterminé.

4. Système selon la revendication 1, dans lequel ledit moyen de limitation comprend un filtre-saturateur adapté pour niveler une progression d'enrichissement à un intervalle de valeurs, ayant une limite inférieure qui ne peut pas être passée par l'enrichissement.

5. Système selon la revendication 4, dans lequel ladite limite inférieure est 1,1.

6. Système selon l'une des revendications 4 ou 5, dans lequel ledit intervalle de valeurs est compris entre 1,5 et 1,1.

7. Procédé pour commander une procédure de régénération active d'un système de traitement de gaz d'échappement (ATS) pour moteur à combustion interne équipé
- d'un filtre à particules ouvert (F) et
- d'un catalyseur d'oxydation diesel (C) placé en amont du filtre ouvert (F) selon une direction d'écoulement sortant de gaz d'échappement (EG) et
- d'un moyen de commande d'injection (ECU) afin de commander un apport de carburant pour moteur selon un rapport air/carburant (lambda) prédéterminé,
le procédé étant **caractérisé en ce qu'**il comprend :
une étape (i) de régénération active du filtre (F) comprenant un enrichissement dudit rapport air/carburant pour augmenter la température au niveau d'une entrée du catalyseur d'oxydation diesel (C) à une valeur minimale de 500 °C et à une valeur optimale de 550 °C et des post-injections appropriées pour réaliser une réaction exothermique dans le catalyseur d'oxydation diesel (C) nécessaire pour augmenter de 50-100 °C la température de l'écoulement de gaz à travers le filtre à particules et
une étape (ii) de limitation dudit enrichissement, durant ladite procédure de régénération active, en fonction de la puissance/couple nécessaire au moteur à combustion interne.

8. Procédé selon la revendication 7, dans lequel un moyen de commande d'injection est approprié pour activer des premières cartes d'injection durant une condition de fonctionnement normal et dans lequel ladite étape (ii) limitant ledit enrichissement comprend une étape (iii) d'activation de deuxièmes cartes d'injection, plus pauvres que les premières, durant une procédure de régénération active du filtre à particules.

9. Procédé selon la revendication 8, dans lequel ladite étape (iii) d'activation desdites deuxièmes cartes est effectuée quand une demande de puissance dépasse un seuil prédéterminé.

10. Procédé selon la revendication 7, dans lequel ladite étape de limitation dudit enrichissement comprend (iv) un filtrage au moyen d'un filtre/saturateur qui est adapté pour niveler une progression d'enrichissement dans un intervalle de valeurs, ayant une limite inférieure qui ne peut pas être passée par l'enrichissement.

11. Procédé selon la revendication 10, dans lequel ladite valeur prédéterminée est 1,1.

12. Procédé selon l'une des revendications 10 ou 11, dans lequel ledit intervalle de valeurs est compris entre 1,5 et 1,1.

13. Programme informatique comprenant un moyen de code de programme pour amener le système selon l'une quelconque des revendications 1 à 6 à exécuter les étapes du procédé selon la revendication 7.

14. Moyen lisible par ordinateur comprenant un programme enregistré, selon la revendication 13.

15. Moteur à combustion interne comprenant un système de traitement de gaz d'échappement (ATS) selon l'une des revendications 1 à 6.

16. Véhicule comprenant un moteur à combustion interne selon la revendication 15.
